# EUROPEAN PATENT APPLICATION

(11) **EP 4 607 504 A1**
(43) Date of publication of application: **27.08.2025**
(21) Application number: 23888013.2
(22) Date of filing: 07.11.2023
(51) Int. Cl.: G10K 11/178, G10L 15/22, H04R 1/02, H04R 1/08, G03B 21/16, G03B 29/00

(54) **NOISE REDUCTION METHOD, PROJECTION DEVICE, AND STORAGE MEDIUM**

(30) Priority: 08.11.2022 CN 202211394052; 08.11.2022 CN 202222976174 U
(71) Applicant: Shenzhen Roborock Innovation Technology Co., Ltd., Shenzhen, Guangdong 518000 (CN); Beijing Roborock Technology Co., Ltd., Beijing 102206 (CN)
(72) Inventor: YU, Guang, Shenzhen, Guangdong 518000 (CN); YUE, Zengxu, Shenzhen, Guangdong 518000 (CN); ZHOU, Qiang, Shenzhen, Guangdong 518000 (CN); GAO, Wenjie, Shenzhen, Guangdong 518000 (CN)
(74) Representative: Manitz Finsterwald Patent- und Rechtsanwaltspartnerschaft mbB
(86) International application number: PCT/CN2023/130266
(87) International publication number: WO 2024/099324

(57) **Abstract**

Disclosed are a noise reduction method, a projection device, and a storage medium. The noise reduction method can be applied to the projection device, and the projection device comprises: a loudspeaker and a heat dissipation fan. The method comprises: generating a noise reduction signal on the basis of a pre-configured target noise signal, wherein the target noise signal is determined on the basis of the noise generated when a heat dissipation fan works; and sending the noise reduction signal to a loudspeaker for output.

## Description

### CROSS-REFERENCE TO RELATED APPLICATION

The present application claims priority to Chinese patent applications No. 202211394052.2 and No. 202222976174.4 filed on November 8, 2022, and the entire contents of these Chinese patent applications are incorporated herein by reference.

### TECHNICAL FIELD

The present disclosure relates to a noise reduction method, a projection apparatus, and a storage medium.

### BACKGROUND ART

With the development of projection technologies, projection apparatuses are more and more widely used in people's work and life. For example, many families choose to use projection apparatuses as viewing devices, so as to reduce occupation of a home space while enjoying a large screen.

However, noises generated during operation of a projection apparatus (such as a noise generated by a cooling fan, a wind shear noise generated when a cooling airflow passes through an interior of a body of the projection apparatus, or a noise generated by an electronic component due to high-frequency operation) can easily cause interference with users and are not conducive to improving users' experience.

### SUMMARY OF THE INVENTION

According to a first aspect of the present disclosure, a noise reduction method is provided and applied to a projection apparatus. The projection apparatus includes a speaker and a cooling fan. The method includes: generating a noise reduction signal based on a pre-configured target noise signal, wherein the target noise signal is determined based on a noise generated during operation of the cooling fan; and sending the noise reduction signal to the speaker for output.

According to a second aspect of the present disclosure, a noise reduction method is provided and applied to a projection apparatus. The projection apparatus includes a microphone and a speaker that are used for voice interactions with a user. The method includes: collecting, through the microphone, a noise signal generated by the projection apparatus; generating a noise reduction signal based on the noise signal; and sending the noise reduction signal to the speaker for output.

According to a third aspect of the present disclosure, a noise reduction method is provided and applied to a projection apparatus. The projection apparatus includes a microphone and a speaker that are used for voice interactions with a user. The method includes: obtaining noise feature information of the projection apparatus, wherein the noise feature information includes at least two types of the following information: a position of the user, a feature parameter of an environment where the projection apparatus is located, and a current noise level of the projection apparatus; and controlling, based on the noise feature information, the speaker to output a noise reduction signal, wherein the noise reduction signal is used to cancel out a noise generated by the projection apparatus.

According to a fourth aspect of the present disclosure, a projection apparatus is provided. The projection apparatus includes: a speaker, a processor, a memory, and a computer program stored in the memory and runnable on the processor, wherein the computer program, when executed by the processor, implements the steps of the noise reduction method according to the first aspect of the present disclosure.

According to a fifth aspect of the present disclosure, a projection apparatus is provided. The projection apparatus includes: a speaker, a microphone, a processor, a memory, and a computer program stored in the memory and executable by the processor, wherein when executed by the processor, the computer program implements the steps of the noise reduction method according to the first aspect or the second aspect of the present disclosure.

According to a sixth aspect of the present disclosure, a computer-readable storage medium is provided, wherein the computer-readable storage medium stores a computer instruction; and when the computer instruction is executed by a computer, the computer is caused to perform the steps of the noise reduction method according to the first aspect, the second aspect, or the third aspect of the present disclosure.

The above description is merely an overview of technical solutions of the present disclosure. The following describes embodiments of the present disclosure for a better understanding of the technical means of the present disclosure such that they can be implemented according to the content of the Description, and to make the above and other features and effects of the present disclosure more obvious and easier to understand.

### BRIEF DESCRIPTION OF THE DRAWINGS

FIG. 1 is a structural block diagram of an exemplary projection apparatus according to some embodiments of the present disclosure.
FIG. 2 is a flowchart of an exemplary noise reduction method according to some embodiments of the present disclosure.
FIG. 3 is a structural block diagram of an exemplary projection apparatus according to some other embodiments of the present disclosure.
FIG. 4 is a schematic structural diagram of an exemplary projection apparatus according to still some other embodiments of the present disclosure.
FIG. 5 is a schematic diagram of a positional relationship between components according to some embodiments of the present disclosure.
FIG. 6 is a flowchart of an exemplary noise reduction method according to some other embodiments of the present disclosure.
FIG. 7 is a flowchart of an exemplary noise reduction method according to still some other embodiments of the present disclosure.

### DETAILED DESCRIPTION

Exemplary embodiments of the present disclosure are described below in further detail with reference to the accompanying drawings. It should be noted that, in the accompanying drawings, dimensions of elements may be exaggerated for clarity of illustration. Although the accompanying drawings show exemplary embodiments of the present disclosure, it should be understood that the present disclosure can be implemented in various forms and shall not be limited by the embodiments described herein. On the contrary, these embodiments are provided to help more thoroughly understand the present disclosure and entirely convey the scope of the present disclosure to those skilled in the art.

It should be noted that, the term "and/or" herein merely indicates an association relationship that describes associated objects, and indicates that there may be three relationships. For example, "A and/or B" may indicate the following three cases: A exists alone, both A and B exist, and B exists alone. The term "plurality of" means two or more. The terms "first", "second", and " third" are used only as markers, and are not used as a restriction on a quantity of described objects and an order of the objects. The terms "front", "rear", "upper", "lower", "left", "right", and the like are merely used to indicate relative positional relationships. After an absolute position of a described object is changed, its relative positional relationship may also be changed accordingly.

Some embodiments of the present disclosure provide a noise reduction method and a projection apparatus using the noise reduction method. By using the noise reduction method, at least a part of a noise generated during operation of the projection apparatus can be canceled out, so as to achieve a noise reduction effect, thereby improving a sound effect of the projection apparatus.

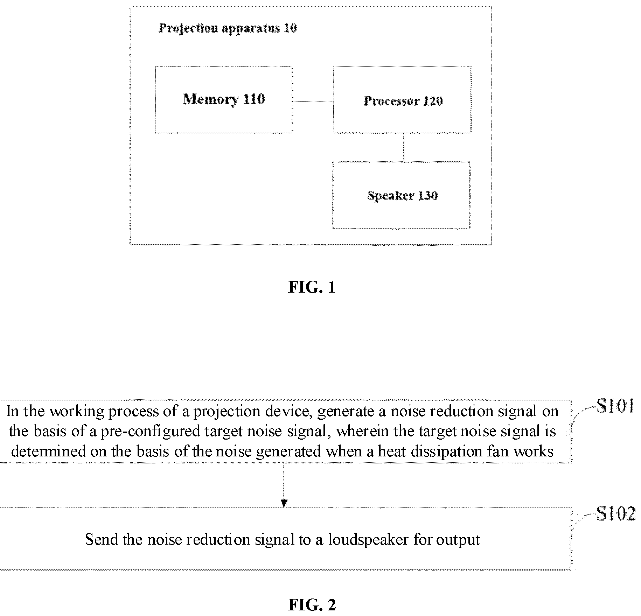

FIG. 1 is a structural block diagram of an exemplary projection apparatus according to some embodiments of the present disclosure. The projection apparatus has an audio output function. As shown in FIG. 1, the projection apparatus 10 may include: a speaker 130, a processor 120, a memory 110, and a computer program stored in the memory 110 and runnable on the processor 120. FIG. 2 is a flowchart of an exemplary noise reduction method according to some embodiments of the present disclosure. When the computer program is executed by the processor 120, steps of the noise reduction method shown in FIG. 2 are implemented. Of course, in addition to the above components, the projection apparatus 10 further includes other members, such as a housing, a cooling fan, a microphone, an optical machine, or the like, which are not described in detail herein. For example, the projection apparatus 10 may be a projector or another electronic device having a projection function. As shown in FIG. 2, the noise reduction method may include the following steps.

In S101: during operation of a projection apparatus, a noise reduction signal is generated based on a pre-configured target noise signal, wherein the target noise signal is determined based on a noise generated by a cooling fan.

In S102: the noise reduction signal is sent to a speaker for output.

In some embodiments, phase inversion may be performed on the target noise signal to obtain the noise reduction signal. Because the noise reduction signal and the target noise signal have opposite phases and the same amplitude, a corresponding noise is canceled out by reusing the speaker 130 in the projection apparatus 10 to play the noise reduction signal, which is beneficial to simplifying a structure of the projection apparatus 10 and reducing hardware costs while a noise of the entire projection apparatus 10 is reduced.

Considering that the noise generated during operation of the projection apparatus 10 mainly comes from rotation of the cooling fan, noise analysis may be separately performed on the cooling fan to determine the target noise signal. In other words, the target noise signal may be determined in advance based on the noise generated during operation of the cooling fan. In some embodiments, the target noise signal may be a noise signal generated during operation of the cooling fan in a preset environment. The preset environment may be considered as a standard environment that meets a preset condition, and is a low-noise environment relative to a noise emitted by a noise source. In some embodiments, the preset condition may be: a difference between the noise from the noise source and a background noise of the environment being greater than a preset threshold. The preset threshold may be determined according to needs of an actual scenario. For example, the preset threshold is 15 dB (decibel), and the noise source is the cooling fan. Assuming that the noise generated during operation of the cooling fan is 40 dB, the background noise of the preset environment is required to be less than 25 dB. A smaller background noise of the environment leads to more accurate measurement of the noise of the fan. For example, a fan noise test may be performed in an anechoic chamber with a background noise less than 17 dB.

In some embodiments, considering that there is a distance between the speaker 130 and the cooling fan of the projection apparatus 10, to improve accuracy of a generated noise reduction signal and achieve a better noise reduction effect, the target noise signal may be a noise signal transferred to a position of the speaker 130 during operation of the cooling fan.

In some embodiments, a plurality of fan samples may be prepared in advance based on a model of the cooling fan used in the projection apparatus 10. Noise signals generated during operation of the cooling fans in the preset environment are separately collected. Statistical analysis is performed on the collected noise signals to obtain a reference noise signal. For example, the statistical analysis may be: averaging noise signals collected in a batch and using an averaging result as the reference noise signal, or may be using a noise signal with a highest probability as the reference noise signal, which is determined according to needs of an actual scenario and not limited in this embodiment.

In some embodiments, the reference noise signal may be converted to a noise signal transferred to a position of the speaker 130 in the projection apparatus 10, so that the noise signal at the position of the speaker 130 is used as the target noise signal, and is configured in the projection apparatus 10.

In some embodiments, an attenuation degree of a noise sound wave generated during operation of the cooling fan and transferred to the position of the speaker 130 may be analyzed based on an actual positional relationship between the speaker 130 and the cooling fan in the projection apparatus 10. Then, the above reference noise signal is converted based on the analyzed attenuation degree, so as to obtain the noise signal at the position of the speaker 130. In some embodiments, the attenuation degree includes an amplitude variation. In this case, adjusting an amplitude of the reference noise signal based on the amplitude variation is required in the above conversion process.

In some embodiments, considering that noises generated by different models of cooling fans are different, target noise signals corresponding to various different models of cooling fans may be separately obtained in advance, so as to adapt to noise reduction of different models of cooling fans and achieve a better noise reduction effect. Target noise signals corresponding to various different fan models are pre-configured in the projection apparatus 10. During use, a fan model corresponding to an actually used cooling fan is obtained first; then, a corresponding target noise signal is matched based on the fan model; and finally, a noise reduction signal is generated based on the matched target noise signal.

It should be noted that the pre-configured target noise signal may be represented by a spectrum feature, or may be represented by noise parameters such as an amplitude, a frequency, and a phase, or may be represented by an acoustic wave transfer function, which will not be limited in this embodiment.

In the projection apparatus 10, the speaker 130 is configured to output an audio signal to be played, such as conference audio, video audio, a voice prompt, or the like, and is also configured to output the noise reduction signal obtained in S101. In some embodiments, in a case that the speaker 130 is required to output both the audio signal to be played and the noise reduction signal, the noise reduction signal and the audio signal to be played may be superimposed; and the audio signal superposed with the noise reduction signal is sent to the speaker 130 for playing. In this way, audio can be played normally, and the noise reduction signal can also be played, so that a noise is canceled out to some extent, thereby achieving a noise reduction effect.

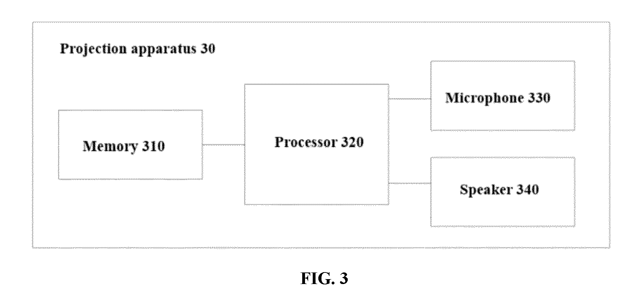

FIG. 3 is a structural block diagram of an exemplary projection apparatus according to some other embodiments of the present disclosure. The projection apparatus has a voice interaction function. As shown in FIG. 3, the projection apparatus 30 may include: a microphone 330, a speaker 340, a processor 320, a memory 310, and a computer program stored in the memory 310 and runnable on the processor 320, wherein, the computer program, when executed by the processor 320, implements the steps of the noise reduction method provided below. For example, the projection apparatus 30 may be a projector or another electronic device having a projection function. In some embodiments, the microphone 330 is configured to collect a voice instruction of a user, so that a corresponding operation is performed based on the voice instruction of the user. The speaker 340 is configured to play an audio signal. According to the noise reduction method, a noise is read by reusing the microphone 330, and a corresponding noise reduction signal is played by reusing the speaker 340, so that active noise reduction is performed on the projection apparatus 30 on the premise that no hardware is added.

Of course, in addition to the above components, the projection apparatus 30 further includes other members, such as a housing, a cooling fan 350, an optical machine, or the like, which are not described in detail herein. For example, the projection apparatus 30 may be a projector or another electronic device having a projection function.

In some embodiments, a layout distance between the microphone 330 and the cooling fan 350 is less than a layout distance between the microphone 330 and the speaker 340. This can not only ensure that the microphone 330 is close to a main noise source, but also reduce a negative effect of audio output by the speaker 340 on noise collection, thereby facilitating relatively accurate collection of the noise of the projection apparatus 30.

To fully send a noise reduction signal to the user, and to reduce a noise level, the speaker 340 may be positioned as close as possible to a position of the user. In some embodiments, it is taken into consideration that in some application scenarios, a user is generally behind the projection apparatus 30. Herein, "behind" is a direction opposite to a projection direction. In this case, the speaker 340 may be disposed on a side facing away from the projection direction, and face a back of the projection apparatus 30. To minimize a negative effect of a noise emitted and hot air blown by the cooling fan 350 on the user, the cooling fan 350 may be positioned as far as possible away from the position of the user.

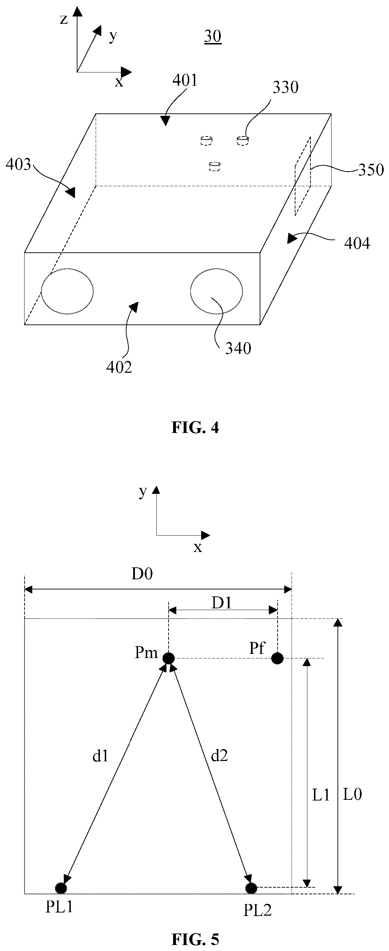

FIG. 4 is a schematic structural diagram of an exemplary projection apparatus according to still some other embodiments of the present disclosure. As shown in FIG. 4, the projection apparatus 30 is provided with a first side 401, a second side 402, a third side 403, and a fourth side 404. The first side 401 and the second side 402 are two opposite sides. The third side 403 and the fourth side 404 are two opposite sides. The first side 401 is a side facing along the projection direction, namely, a side facing along a projection screen. The second side 402 is a side facing away from the projection direction. In an actual application scenario, if the first side 401 and the second side 402 are referred to as a front side and a rear side respectively, the third side 403 and the fourth side 404 may be referred to as a left side and a right side respectively. In this case, the speaker 340 may be disposed on the second side 402, and adapted to a sound output hole in the housing of the projection apparatus 30. The cooling fan 350 may be disposed at an end of the third side 403 or the fourth side 404 away from the second side 402, be adapted to a heat dissipation vent in the housing of the projection apparatus 30, and discharge air to the left side or the right side.

It is assumed that a direction perpendicular to the first side 401 and the second side 402 is used as a length direction of the projection apparatus 30 (for example, a direction y in FIG. 4), a direction perpendicular to the third side 403 and the fourth side 404 is used as a width direction of the projection apparatus 30 (for example, a direction x in FIG. 4), and a direction perpendicular to a top surface and a bottom surface is used as a height direction of the projection apparatus 30 (for example, a z-axis direction of a coordinate system shown in FIG. 4). The length direction is the same as the projection direction of the projection apparatus 30. In some embodiments, a distance between the cooling fan 350 and the speaker 340 in the length direction may be greater than or equal to a half of a length of the projection apparatus 30. In some embodiments, a distance between the microphone 330 and the speaker 340 in the length direction may be greater than or equal to a half of the length of the projection apparatus 30, so that the microphone 330 is as far as possible away from the speaker 340.

In some embodiments, to ensure that the microphone 330 is as close as possible to the cooling fan 350 and as far as possible away from the speaker 340, the distance between the microphone 330 and the speaker 340 in the length direction may be equal to the distance between the cooling fan 350 and the speaker 340 in the length direction. In some embodiments, a distance between the microphone 330 and the cooling fan 350 in the width direction may be less than or equal to a half of a width of the projection apparatus 30.

It should be noted that in the above description of the positional relationships, the position of the cooling fan 350 is based on a central position of a rotation shaft of the cooling fan 350.

A quantity of microphones 330 may be set according to actual needs. There may be one or more microphones. This is not limited in this embodiment. When there is a plurality of microphones 330, the distance between each microphone 330 and the cooling fan 350 is less than the distance between the microphone and the speaker 340. In some embodiments, the plurality of microphones 330 may be arranged at intervals along a straight line, or may be arranged around a center point. In this case, the position of the microphone 330 means a position of the center point of the plurality of microphones 330. In some embodiments, there are three microphones 330; the three microphones 330 are disposed around one center point; and all pairwise distances between the microphones 330 are equal. For example, as shown in FIG. 4, connection lines of the three microphones 330 may approximately form an equilateral triangle; and the three microphones 330 are located at three vertexes of the equilateral triangle, and arranged around a center point of the equilateral triangle.

A quantity of speakers 340 may also be set according to actual needs. There may be one or more speakers. This is not limited in this embodiment. For example, as shown in FIG. 4, there may be two speakers 340; and the two speakers 340 are respectively disposed at two ends of the second side 402 of the projection apparatus 30.

The above three microphones 330 and two speakers 340 are used as an example. In some embodiments, distances between the center point of the three microphones 330 and the two speakers 340 may be equal. This can not only maximize a distance between an array of the microphones 330 and the speaker 340, but also reduce a distance difference between the same microphone 330 and the two speakers 340, thereby reducing a negative effect of the speaker 340 on noise collection of the microphone 330, and enhancing accuracy of a read noise signal. Therefore, accuracy of the generated noise reduction signal is improved, so as to achieve a better noise reduction effect.

FIG. 5 is a schematic diagram of a positional relationship between components according to some embodiments of the present disclosure. FIG. 5 is a schematic diagram of positions of orthographic projections of the microphone 330, the cooling fan 350, and the speaker 340 on a bottom surface of a housing of the projector. In FIG. 5, the two speakers 340 are used as an example; a point Pm denotes a position of the orthographic projection of the microphone 330; a point Pf denotes a position of the orthographic projection of the cooling fan 350; points PL1 and PL2 respectively denote positions of the orthographic projections of the two speakers 340; L0 denotes a length of the projection apparatus 30; L1 denotes distances from the microphone 330 and the cooling fan 350 to the speakers 340 in the length direction, namely, a y-axis direction; D0 denotes the width of the projection apparatus 30; D1 denotes a distance between the microphone 330 and the cooling fan 350 in the width direction, namely, the x-axis direction; d1 and d2 respectively denote distances between the microphone 330 and the two speakers 340; D1 may be greater than one third of D0 and less than or equal to D0; L1 may be greater than or equal to a half of L0; and d1 may be equal to d2.

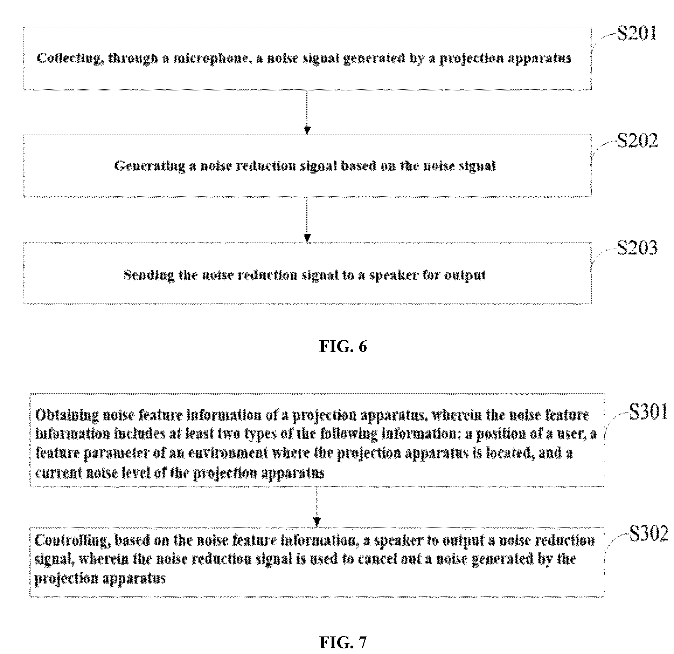

FIG. 6 is a flowchart of an exemplary noise reduction method according to some other embodiments of the present disclosure. The noise reduction method is applicable to the projection apparatus 30 having a voice interaction function. As shown in FIG. 6, the noise reduction method may include the following steps.

In S201: a noise signal generated by the projection apparatus is collected through a microphone.

In S202: a noise reduction signal is generated based on the noise signal.

In S203: the noise reduction signal is sent to a speaker for output.

A noise generated during operation of the projection apparatus 30 is collected through a microphone 330, which is beneficial for improving accuracy of the noise signal. For example, in addition to a noise of a fan, a noise generated by another noise source can also be collected, such as a wind shear noise generated when a cooling airflow passes through an interior of a body of the projection apparatus 30, a noise generated by an electronic component due to high-frequency operation, an environmental noise, or the like. This is beneficial to improving accuracy of the generated noise signal, so as to achieve a better noise reduction effect.

Because both the microphone 330 and the speaker 340 are original components in the projection apparatus 30, implementing noise reduction by reusing the microphone 330 and the speaker 340 is beneficial to simplifying a structure of the projection apparatus 30 and reducing hardware costs on the premise that a sound effect of the projection apparatus 30 is improved.

Because the microphone 330 is further configured to read a voice instruction while reading a noise, in response to a user sending a voice instruction, an acoustic signal collected by the microphone 330 further includes not only the noise signal generated by the projection apparatus 30, but also the voice instruction of the user. Therefore, in S201, a process of collecting the noise signal through the microphone 330 may include: obtaining the acoustic signal collected by the microphone 330; and extracting the noise signal from the acoustic signal. It should be noted that a signal processing manner of extracting the noise signal from the acoustic signal is not limited in this embodiment. For example, the noise signal may be extracted from the collected acoustic signal based on a pre-configured range of noise frequencies.

Of course, in an implementation process of the voice interaction function of the projection apparatus 30, filtering out the noise signal and extracting the voice instruction of the user from the acoustic signal collected by the microphone 330 are required, so that the projection apparatus 30 is controlled to perform a corresponding operation.

Considering that a rotational speed of the fan may be adjusted as temperatures and conditions inside and outside the projection apparatus 30 change, noise collection may be performed by using the microphone 330 in real time, so that when a noise changes, the noise reduction signal is adjusted in time, thereby implementing flexible noise reduction.

In some embodiments, the microphone 330 may be controlled, at a preset time interval, to collect noise signals generated by the projection apparatus 30. The preset time interval may be configured according to needs of an actual application scenario. Every time a sampling time point is reached after the preset time interval, noise sampling is completed once. For noise signals collected at all sampling time points, corresponding noise reduction signals may be generated sequentially, and sent to the speaker 340 for output. Alternatively, processing, for example, averaging, may also be performed on noise signals collected at a plurality of sampling time points that are within the preset time period; and a corresponding noise reduction signal is generated based on the processed noise signal, and sent to the speaker 340 for output.

In some other embodiments, the rotational speed of the cooling fan 350 may also be monitored. When a monitoring result shows that the rotational speed changes, the microphone 330 is triggered to collect a noise signal generated by the projection apparatus 30; and a new noise reduction signal is generated based on the noise signal, and sent to the speaker 340 for output.

The noise signal collected through the microphone 330 in S201 is a noise signal transferred to a position of the microphone 330. The noise reduction signal is sent by the speaker 340. Considering that there is a distance between the microphone 330 and the speaker 340, in some embodiments, the noise signal collected in S201 may be first converted to a target noise signal corresponding to a position of the speaker 340; and then, phase inversion may be performed on the target noise signal to obtain the noise reduction signal. In this way, accuracy of the obtained noise reduction signal can be improved effectively, so as to achieve a better noise reduction effect. Of course, in other embodiments, phase inversion may be directly performed on the noise signal collected in S201, so as to obtain the noise reduction signal. This is not limited in this embodiment.

In some embodiments, a variation of a noise at the position of the speaker 340 relative to a noise at the position of the microphone 330 may be analyzed during operation of the projection apparatus 30 based on an actual positional relationship between the speaker 340 and the cooling fan 350 in the projection apparatus 30; and the noise variation may be pre-configured in the projection apparatus 30. During use, the noise signal collected by the microphone 330 is converted to the target noise signal corresponding to the position of the speaker 340 based on the pre-configured noise variation.

In some embodiments, the generated noise reduction signal may be superimposed with an output signal of the speaker 340 for playing, so as to cancel out the noise generated by the projection apparatus 30, thereby improving the sound effect of the projection apparatus 30.

FIG. 7 is a flowchart of an exemplary noise reduction method according to still some other embodiments of the present disclosure. The noise reduction method is applicable to the projection apparatus 30 having a voice interaction function. As shown in FIG. 7, the noise reduction method may include the following steps.

In S301: noise feature information of the projection apparatus is obtained, wherein the noise feature information includes at least two types of the following information: a position of a user, a feature parameter of an environment where the projection apparatus is located, and a current noise level of the projection apparatus.

In S302: a speaker is controlled, based on the noise feature information, to output a noise reduction signal, wherein the noise reduction signal is used to cancel out a noise generated by the projection apparatus.

It should be noted that the position of the user, the feature parameter of the environment where the projection apparatus 30 is located, and the current noise level of the projection apparatus 30 are all factors that affect a noise amplitude of the projection apparatus 30 perceived by the user. In a noise reduction process of the projection apparatus 30, taking effects of these factors into consideration is beneficial to improving a noise reduction effect.

For example, the position of the user determines a direction in which the noise emitted by the projection apparatus 30 is transferred to ears of the user. In a case that the noise feature information includes the position of the user, the speaker 340 may be controlled to output a noise reduction signal directed to the position of the user, which reduces energy consumption of the projection apparatus 30 while implementing noise reduction. For example, assuming that the projection apparatus 30 is provided with two speakers 340 that are disposed at two ends of the second side 402 respectively, if the user is at a rear left side of the projection apparatus 30, the speaker 340 near the rear left side may be selected and controlled to output the noise reduction signal; or if the user is at a rear right side of the projection apparatus 30, the speaker 340 near the rear right side may be selected and controlled to output the noise reduction signal.

There is a plurality of manners in which the position of the user is obtained. In some embodiments, in a case that the projection apparatus 30 includes a plurality of microphones 330, the plurality of microphones 330 constitute a microphone array; and the position of the user may be obtained based on signal delays of a voice instruction of the user collected by the microphones 330 in the microphone array. In some embodiments, when the projection apparatus 30 is turned on, the speaker 340 is controlled to output a voice guide that is used for prompting the user to utter a sound to confirm the position of the user; and after hearing the voice guide, the user may issue a corresponding response, for example, response "I'm here", so that the position of the user can be obtained based on delays by which the microphones 330 in the array collect the voice signal of the user.

In some other embodiments, the user may alternatively input his/her position by using an application corresponding to the projection apparatus 30. For example, the application may display a 2D or 3D model of a space where the user is, such as a bedroom, a living room, or the like; and the user may input the position by clicking a corresponding position in the model based on an actual position of the user.

In some embodiments, the feature parameter of the environment where the projection apparatus 30 is located may include: a spatial reverberation type and/or a background noise amplitude. It may be understood that in an indoor scenario, acoustic energy emitted by a sound source is continuously absorbed by a wall surface in a propagation process and thus gradually attenuated. A phenomenon that a sound wave is reflected back and forth in various directions and thus attenuated gradually is called room reverberation. Similarly, a noise emitted by the projection apparatus 30 is also affected by room reverberation; and degrees of attenuation in different indoor spaces are different. Therefore, adjusting the noise reduction signal based on the spatial reverberation type is beneficial to achieving a better noise reduction effect.

In some embodiments, a noise reduction signal, adaptable to the projection apparatus 30 in an environment corresponding to each spatial reverberation type, may be determined in advance based on various different spatial reverberation types, which means, playing the noise reduction signal can achieve a relatively good noise reduction effect. Then, various different spatial reverberation types and noise reduction signals adaptable thereto are correspondingly configured in the projection apparatus 30. During use, a spatial reverberation type of the environment where the projection apparatus 30 is located is determined first; and then, the speaker 340 is controlled to play a noise reduction signal adaptable to the spatial reverberation type.

In some other embodiments, a signal adjustment magnitude corresponding to each spatial reverberation type may be determined in advance based on various different spatial reverberation types; and then, various different spatial reverberation types and signal adjustment magnitudes corresponding thereto are correspondingly configured in the projection apparatus 30. During use, a spatial reverberation type of the environment where the projection apparatus 30 is located is determined first; then, a corresponding signal adjustment magnitude is matched based on the spatial reverberation type; an original noise reduction signal is adjusted based on the signal adjustment magnitude; and finally, the speaker 340 is controlled to play the adjusted noise reduction signal.

Spatial reverberation types may be classified based on reverberation time of environments where the speaker 340 is located. In some embodiments, the spatial reverberation types may be classified as an indoor space and an outdoor space, or may be classified as a bedroom space, a living room space, a meeting room space, and the like. This is not limited in this embodiment.

In some embodiments, the spatial reverberation type of the environment where the projection apparatus 30 is located may be obtained by detecting the reverberation duration of the environment. For example, when the projection apparatus 30 is turned on, the speaker 340 is controlled to output a test acoustic signal; an echo signal of the test acoustic signal is collected by using the speaker 340; and the reverberation duration of the environment where the projection apparatus 30 is located is determined based on a variation of the collected echo signal, thereby determining the spatial reverberation type based on the reverberation duration.

In some other embodiments, the spatial reverberation type of the environment where the projection apparatus 30 is located may also be input by the user. For example, the user may input the spatial reverberation type in a voice input manner or in a manner of selecting a corresponding touch button on an interface of the application.

A background noise is a noise of the environment where the projection apparatus 30 is located, rather than a noise generated by the projection apparatus 30 itself. A larger background noise amplitude leads to a louder background noise, and a larger negative effect on hearing the background noise by the user. When the background noise reaches a specific degree, a negative effect of the noise generated by the projection apparatus 30 on the user can be ignored. Therefore, on/off of the noise reduction signal may be controlled based on the background noise amplitude. In this way, the noise reduction signal may be turned off when a background noise in the environment is too loud, which is beneficial for reducing energy consumption.

In some embodiments, a background noise threshold may be pre-configured in the projection apparatus 30; a background noise amplitude is detected in real time through the microphone 330; whether the detected background noise amplitude exceeds the background noise threshold is determined; and if the detected background noise amplitude exceeds the background noise threshold, the speaker 340 is controlled to stop playing the noise reduction signal; or if the detected background noise amplitude does not exceed the background noise threshold, the speaker 340 is controlled to continue playing the noise reduction signal. It should be noted that different types of sound waves may be classified based on frequency bands; and frequency bands of sound waves corresponding to the background noise of the environment, the noise generated by the projection apparatus 30, and the voice instruction of the user are different. Therefore, a background noise signal may be extracted, based on a frequency band difference, from the acoustic signal collected by the microphone 330, thereby determining the background noise amplitude.

The noise reduction signal played by the speaker 340 may come from a plurality of sources. In some embodiments, the noise reduction signal may be a pre-configured fixed noise reduction signal. In some other embodiments, the noise reduction signal may be generated based on the current noise level of the projection apparatus 30. The current noise level may be determined based on a noise signal generated by the projection apparatus 30 and collected by the microphone 330 in real time. Compared with a fixed noise reduction signal, a noise reduction signal generated based on the current noise level can better adapt to a real noise condition, which is beneficial to achieving a better noise effect.

According to needs of an actual scenario, at least two of the above three types of information may be pre-selected as the noise feature information. During use, the noise reduction signal output by the speaker 340 is controlled based on the obtained noise feature information, thereby achieving a better noise reduction effect. In some embodiments, the noise feature information may include: the position of the user, and the feature parameter of the environment where the projection apparatus 30 is located; or the position of the user, and the current noise level; or the feature parameter of the environment where the projection apparatus 30 is located, and the current noise level of the projection apparatus 30; or the position of the user, the feature parameter of the environment where the projection apparatus 30 is located, and the current noise level of the projection apparatus 30. This is not limited in this embodiment.

**In** addition, an embodiment of the present disclosure further provides a computer-readable storage medium. The computer-readable storage medium stores a computer instruction. When the computer instruction is run on a computer, the computer is caused to perform processes in the embodiment of the noise reduction method shown in FIG. 2, FIG. 6, or FIG. 7, and the same technical effect can be achieved. To avoid repetition, details are not described herein. For example, the computer-readable storage medium may be a read-only memory (ROM for short), a random access memory (RAM for short), a magnetic disk, an optical disc, or the like.

It should be noted that the embodiments in the present disclosure are described in a progressive manner. Each embodiment focuses on what is different from other embodiments. For same or similar parts in the embodiments, mutual reference may be made.

Those of ordinary skill in the art should understand that the discussion of any of the above embodiments is only exemplary, and is not intended to imply that the scope of the present disclosure is limited to these examples. Under the concept of the present disclosure, the above embodiments or the technical features in different embodiments may also be combined, the steps may be performed in any order, and there are many other changes in different aspects of one or more embodiments of the present disclosure as described above, which are not provided in the details for brevity.

Although exemplary embodiments of the present disclosure have been described, those skilled in the art can make changes and modifications to these embodiments once they learn the basic inventive concept. Therefore, the appended claims are intended to be interpreted as to including the exemplary embodiments and all changes and modifications falling within the scope of the present disclosure.

According to a first aspect of the present disclosure, a noise reduction method is provided and applied to a projection apparatus. The projection apparatus includes a speaker and a cooling fan. The method includes: generating a noise reduction signal based on a pre-configured target noise signal, wherein the target noise signal is determined based on a noise generated during operation of the cooling fan; and sending the noise reduction signal to the speaker for output.

With reference to the first aspect of the present disclosure, in some embodiments, the target noise signal is a noise signal transferred to a position of the speaker during operation of the cooling fan.

With reference to the first aspect of the present disclosure, in some embodiments, the target noise signal is obtained in the following steps: separately collecting noise signals generated during operation of a plurality of fan samples in a preset environment; performing statistical analysis on the collected noise signals to obtain a reference noise signal, and converting the reference noise signal to a noise signal corresponding to the position of the speaker in the projection apparatus; and determining the noise signal corresponding to the position of the speaker as the target noise signal.

With reference to the first aspect of the present disclosure, in some embodiments, the sending the noise reduction signal to the speaker for output includes: superposing the noise reduction signal with an audio signal to be played; and sending the audio signal superposed with the noise reduction signal to the speaker for playing.

According to a second aspect of the present disclosure, a noise reduction method is provided and applied to a projection apparatus. The projection apparatus includes a microphone and a speaker that are used for voice interactions with a user. The method includes: collecting, through the microphone, a noise signal generated by the projection apparatus; generating a noise reduction signal based on the noise signal; and sending the noise reduction signal to the speaker for output.

With reference to the second aspect of the present disclosure, in some embodiments, in response to a user sending a voice instruction, the collecting, through the microphone, the noise signal generated by the projection apparatus includes: obtaining an acoustic signal collected by the microphone, wherein the acoustic signal includes the noise signal generated by the projection apparatus and the voice instruction of the user; and extracting the noise signal from the acoustic signal.

With reference to the second aspect of the present disclosure, in some embodiments, the generating the noise reduction signal based on the noise signal includes: converting the noise signal to a target noise signal corresponding to a position of the speaker; and performing phase inversion on the target noise signal to obtain the noise reduction signal.

According to a third aspect of the present disclosure, a noise reduction method is provided and applied to a projection apparatus. The projection apparatus includes a microphone and a speaker that are used for voice interactions with a user. The method includes: obtaining noise feature information of the projection apparatus, wherein the noise feature information includes at least two types of the following information: a position of the user, a feature parameter of an environment where the projection apparatus is located, and a current noise level of the projection apparatus; and controlling, based on the noise feature information, the speaker to output a noise reduction signal, wherein the noise reduction signal is used to cancel out a noise generated by the projection apparatus.

With reference to the third aspect of the present disclosure, in some embodiments, the feature parameter includes: a spatial reverberation type and/or a background noise amplitude.

With reference to the third aspect of the present disclosure, in some embodiments, a plurality of microphones are provided; and the position of the user is determined based on signal delays by which the plurality of microphones collect a voice instruction of the user.

According to a fourth aspect of the present disclosure, a projection apparatus is provided. The projection apparatus includes: a speaker, a processor, a memory, and a computer program stored in the memory and runnable on the processor, wherein the computer program, when executed by the processor, implements the steps of the noise reduction method according to the first aspect of the present disclosure.

According to a fifth aspect of the present disclosure, a projection apparatus is provided. The projection apparatus includes: a speaker, a microphone, a processor, a memory, and a computer program stored in the memory and runnable on the processor, wherein the computer program, when executed by the processor, implements the steps of the noise reduction method according to the first aspect or the second aspect of the present disclosure.

With reference to a fifth aspect of the present disclosure, in some embodiments, the projection apparatus further includes: a cooling fan, wherein a distance between the microphone and the cooling fan is less than a distance between the microphone and the speaker.

With reference to the fifth aspect of the present disclosure, in some embodiments, in a length direction of the projection apparatus, the distance between the microphone and the speaker is greater than or equal to a half of a length of the projection apparatus, wherein the length direction is the same as a projection direction of the projection apparatus.

With reference to the fifth aspect of the present disclosure, in some embodiments, in a width direction of the projection apparatus, the distance between the microphone and the cooling fan is less than or equal to a half of a width of the projection apparatus.

With reference to the fifth aspect of the present disclosure, in some embodiments, in the width direction of the projection apparatus, the distance between the microphone and the cooling fan is greater than or equal to one third of the width of the projection apparatus, and less than or equal to a half of the width of the projection apparatus.

With reference to the fifth aspect of the present disclosure, in some embodiments, in a length direction of the projection apparatus, the distance between the microphone and the speaker is equal to a distance between the cooling fan and the speaker.

With reference to the fifth aspect of the present disclosure, in some embodiments, the projection apparatus is provided with a first side and a second side that are disposed opposite to each other; the first side is a side facing along a projection direction; and the speaker is disposed on the second side.

With reference to the fifth aspect of the present disclosure, in some embodiments, the projection apparatus is further provided with a third side and a fourth side that are disposed opposite to each other; and the cooling fan is disposed at an end of the third side or the fourth side away from the second side.

With reference to the fifth aspect of the present disclosure, in some embodiments, a plurality of microphones are provided; and the distance between each microphone and the cooling fan is less than the distance between the microphone and the speaker.

With reference to the fifth aspect of the present disclosure, in some embodiments, three microphones are provided; the three microphones are disposed around one center point; and all pairwise distances between the microphones are equal.

With reference to the fifth aspect of the present disclosure, in some embodiments, two speakers are provided; and distances between the center point and the two speakers are equal.

With reference to the fifth aspect of the present disclosure, in some embodiments, three microphones and two speakers are provided; the three microphones are disposed around one center point; and distances between the center point and the two speakers are equal.

According to a sixth aspect of the present disclosure, a computer-readable storage medium is provided, wherein the computer-readable storage medium stores a computer instruction; and when the computer instruction is run on a computer, the computer is caused to perform the steps of the noise reduction method according to the first aspect, the second aspect, or the third aspect of the present disclosure.

## Claims

1. A noise reduction method, applied to a projection apparatus, wherein the projection apparatus comprises a speaker and a cooling fan, and the method comprises:
generating a noise reduction signal based on a pre-configured target noise signal, wherein the target noise signal is determined based on a noise generated during operation of the cooling fan; and
sending the noise reduction signal to the speaker for output.

2. The noise reduction method according to claim 1, wherein the target noise signal is a noise signal transferred to a position of the speaker during operation of the cooling fan.

3. The noise reduction method according to claim 2, wherein the target noise signal is determined by:
separately collecting noise signals generated during operation of a plurality of fan samples in a preset environment;
performing statistical analysis on the collected noise signals to obtain a reference noise signal, and converting the reference noise signal to a noise signal corresponding to the position of the speaker in the projection apparatus; and
determining the noise signal corresponding to the position of the speaker as the target noise signal.

4. The noise reduction method according to claim 1, wherein the sending the noise reduction signal to the speaker for output comprises:
superposing the noise reduction signal with an audio signal to be played; and
sending the audio signal superposed with the noise reduction signal to the speaker for playing.

5. A noise reduction method, applied to a projection apparatus, wherein the projection apparatus comprises a microphone and a speaker that are used for voice interactions with a user, and the method comprises:
collecting, through the microphone, a noise signal generated by the projection apparatus;
generating a noise reduction signal based on the noise signal; and
sending the noise reduction signal to the speaker for output.

6. The noise reduction method according to claim 5, wherein in response to the user sending a voice instruction, the collecting, through the microphone, the noise signal generated by the projection apparatus comprises:
obtaining an acoustic signal collected by the microphone, wherein the acoustic signal comprises the noise signal generated by the projection apparatus and the voice instruction of the user; and
extracting the noise signal from the acoustic signal.

7. The noise reduction method according to claim 5, wherein the generating the noise reduction signal based on the noise signal comprises:
converting the noise signal to a target noise signal corresponding to a position of the speaker; and
performing phase inversion on the target noise signal to obtain the noise reduction signal.

8. A noise reduction method, applied to a projection apparatus, wherein the projection apparatus comprises a microphone and a speaker that are used for voice interactions with a user, and the method comprises:
obtaining noise feature information of the projection apparatus, wherein the noise feature information comprises at least two types of following information: a position of the user, a feature parameter of an environment where the projection apparatus is located, and a current noise level of the projection apparatus; and
controlling, based on the noise feature information, the speaker to output a noise reduction signal, wherein the noise reduction signal is used to cancel out a noise generated by the projection apparatus.

9. The noise reduction method according to claim 8, wherein the feature parameter comprises: a spatial reverberation type and/or a background noise amplitude.

10. The noise reduction method according to claim 8, wherein a plurality of microphones are provided; and the position of the user is determined based on signal delays by which the plurality of microphones collect a voice instruction of the user.

11. A projection apparatus, comprising: a speaker, a processor, a memory, and a computer program stored in the memory and runnable on the processor, wherein the computer program, when executed by the processor, implements steps of the noise reduction method according to any one of claims 1 to 4.

12. A projection apparatus, comprising: a speaker, a microphone, a processor, a memory, and a computer program stored in the memory and runnable on the processor, wherein the computer program, when executed by the processor, implements steps of the noise reduction method according to any one of claims 5 to 10.

13. The projection apparatus according to claim 12, further comprising: a cooling fan, wherein a distance between the microphone and the cooling fan is less than a distance between the microphone and the speaker.

14. The projection apparatus according to claim 13, wherein in a length direction of the projection apparatus, the distance between the microphone and the speaker is greater than or equal to a half of a length of the projection apparatus, wherein the length direction is the same as a projection direction of the projection apparatus.

15. The projection apparatus according to claim 13, wherein in a width direction of the projection apparatus, the distance between the microphone and the cooling fan is less than or equal to a half of a width of the projection apparatus.

16. The projection apparatus according to claim 15, wherein in the width direction of the projection apparatus, the distance between the microphone and the cooling fan is greater than or equal to one third of the width of the projection apparatus, and less than or equal to a half of the width of the projection apparatus.

17. The projection apparatus according to claim 13, wherein in a length direction of the projection apparatus, the distance between the microphone and the speaker is equal to a distance between the cooling fan and the speaker.

18. The projection apparatus according to claim 13, wherein the projection apparatus is provided with a first side and a second side that are disposed opposite to each other; the first side is a side facing along a projection direction; and the speaker is disposed on the second side.

19. The projection apparatus according to claim 18, wherein the projection apparatus is further provided with a third side and a fourth side that are disposed opposite to each other; and the cooling fan is disposed at an end of the third side or the fourth side away from the second side.

20. The projection apparatus according to claim 13, wherein a plurality of microphones are provided; and the distance between each microphone and the cooling fan is less than the distance between the microphone and the speaker.

21. The projection apparatus according to claim 20, wherein three microphones are provided; the three microphones are disposed around one center point; and all pairwise distances between the microphones are equal.

22. The projection apparatus according to claim 21, wherein two speakers are provided; and distances between the center point and the two speakers are equal.

23. The projection apparatus according to claim 13, wherein three microphones and two speakers are provided; the three microphones are disposed around one center point; and distances between the center point and the two speakers are equal.

24. A computer-readable storage medium, storing a computer instruction that, when executed by a computer, causes the computer to perform steps of the noise reduction method according to any one of claims 1 to 10.
